# EUROPEAN PATENT SPECIFICATION

(11) **EP 3 959 477 B1**
(45) Date of publication and mention of the grant of the patent: **14.01.2026**
(21) Application number: 20729132.9
(22) Date of filing: 30.03.2020
(51) Int. Cl.: F28D 20/00

(54) **CALORIC STORE**
WÄRMESPEICHER
ACCUMULATEUR CALORIQUE

(30) Priority: 26.04.2019 GB 201905865; 10.01.2020 GB 202000364
(43) Date of publication of application: 02.03.2022
(73) Proprietor: Energy Systems Management Limited, Cambridge Cambridgeshire CB5 8EP (GB)
(72) Inventor: MACNAGHTEN, James Donnelly, Cambridge Cambridgeshire CB5 8EP (GB)
(74) Representative: Abraham, Richard
(86) International application number: PCT/GB2020/050843
(87) International publication number: WO 2020/217045

(56) References cited:
- WO-A1-00/19154
- WO-A2-2009/103795
- WO-A2-2012/136086

## Description

The present invention relates to a heat store for an energy storage system and particularly but not exclusively to a low-cost, high energy density caloric store.

A calorie is the amount of heat energy needed to raise the temperature of one *gram of* water by one degree Celsius (or one Kelvin). A store that is capable of storing many calories of heat can be referred to as a "Caloric Store" or a "Heat Store".

Thermal energy storage can be used to store and return heat as required for both power generation and industrial processes. If the thermal storage medium changes phase during the storage process, then it is normally able to deliver and absorb heat at almost constant temperatures. For materials that do not change phase they absorb and deliver heat over a temperature range. The amount of heat that they can store is related to their specific heat capacity. This type of storage is normally referred to as sensible heat storage.

For high temperature sensible heat storage, a number of different approaches have been proposed that include liquids (such as thermal oils or molten salts), packed beds (sand or rock) and solid materials such as concrete.

Molten salts are commercially used in concentrating solar thermal power plants. The molten salts are kept in their liquid phase and pumped via a heat exchanger from a hot tank to a cold tank when heat is required or vice versa when charging them up.

Packed beds have been proposed where air or a gas is used as the heat transfer fluid passing through the packed bed and being either heated up (discharging) or cooled down (charging). There are a number of problems with packed beds in that the pumping losses are significant at high temperatures and atmospheric pressure. If the system is pressurised the cost of the storage vessel is very high. The energy densities can be low because of the porosity of the packed bed. If used indirectly then the heat exchangers to and from the thermal storage can be very large. A type of packed bed using refractory bricks has been developed commercially for the steel industry. They are used to pre-heat air before gas is combusted in the air improving the efficiency of the steel making.

A more recent version of high temperature sensible storage using special refractory concrete cast around steel pipes has been developed and deployed at small scale. The low thermal conductivity of the concrete means that a large number of steel pipes are required per unit of thermal storage material. This steel is expensive and the pipework is complicated. The concrete also has to be able to survive the high temperature heat and thermal cycling which also adds to the cost as refractory cements are expensive.

While these different methods of sensible heat storage may all be used it is important that a lower cost solution is provided. The present applicant has identified the need for an improved heat store that overcomes or at least alleviates problems associated with the prior art and provides the potential for an energy-dense, low-cost solution. WO 2012/136086 A2 discloses a heat store according to the preamble of claim 1.

In accordance with a first aspect of the present invention, there is provided a heat store for an energy storage according to claim 1.

In this way, a solid block heat store is provided in which a thermally conductive matrix forms a thermally conductive pathway to distributed thermal filler material and provides structural integrity to the heat store. By suitable selection of thermally conductive matrix and thermal filler materials, good heat storage and good heat transfer properties may be achieved.

The part of the thermally conductive matrix with the thermal filler material embedded therein may be referred to as the thermally conductive matrix core. In one embodiment, the thermally conductive matrix comprises at least one (solid) thermally conductive outer layer formed without thermal filler material surrounding (at least in part) the thermally conductive matrix core. The thermally conductive outer layer may be formed from the same or a different material to the thermally conductive matrix core.

In one embodiment, the thermally conductive matrix core contributes at least 90% of the volume of the body.

According to the invention the thermally conductive matrix comprises a metal matrix (e.g. aluminium matrix). In this way, the body may comprise a solid metal composite.

In one embodiment, the metal matrix comprises an aluminium matrix.

In one embodiment, the metal matrix is formed from recycled material (e.g. recycled aluminium).

In one embodiment, the body is formed by casting a molten thermally conductive matrix material (e.g. molten metal) over the thermal filler material.

In one embodiment, the thermally conductive matrix material has a substantially higher thermal conductivity than the thermal filler material (e.g. at least 10 times higher than the thermal conductivity of the thermal filler material, e.g. at least 100 times higher than the thermal conductivity of the thermal filler material, e.g. at least 200 times higher than the thermal conductivity of the thermal filler material).

In one embodiment, the thermally conductive matrix material has a good heat capacity in its own right (e.g. greater than 600 J/kgK at 273k).

In one embodiment, the body is free-standing (e.g. the thermally conductive matrix provides all structural support).

In another embodiment, the body is housed in a container configured to provide structural support for the body (e.g. with the container providing structural support during at least a part of the temperature range).

In one embodiment, the thermal filler material comprises a plurality of discrete elements interspersed within the thermally conductive matrix.

In one embodiment, the thermal filler material has a melting point that is higher (e.g. substantially higher) than the melting point of the thermally conductive matrix. In this way, the thermal filler material will remain solid during both construction of the heat store and during operation of the heat store (e.g. as the heat store is thermally cycled between upper and lower temperature levels).

In one embodiment, the plurality of discrete elements comprise particles (e.g. irregularly shaped particles).

In one embodiment, the plurality of discrete elements comprise blocks (e.g. stacked blocks). Advantageously, the use of blocks that can be closely packed allows the void space to be minimised and hence the mass of the thermally conductive matrix required to be reduced.

In one embodiment, the plurality of discrete elements are packed to form a substantially discontinuous network of thermal filler material (e.g. such that each of the plurality of discrete elements are substantially surrounded by the thermally conductive matrix). In the case of blocks, the blocks may be arranged in the thermally conductive matrix such that each block is spaced from each of its neighbouring block (e.g. by a small gap, e.g. a 3-20mm gap, e.g. a 3-5mm gap). In this way, the thermally conductive matrix may act to transfer thermal energy to each surface of each individual block.

In another embodiment, the plurality of discrete elements form a substantially continuous network of thermal filler material (e.g. such that each of the plurality of discrete elements is substantially in contact with one or more of the remaining plurality of discrete elements, with only minimal contact with the thermally conductive matrix). In the case of blocks, the blocks may be arranged in the thermally conductive matrix such that each block rests in (e.g. direct) contact upon one or more blocks underneath (e.g. with the thermally conductive matrix making thermal contact primarily along exterior sides of the block and additionally through small gaps extending into the arrangement of blocks).

In one embodiment, the thermal filler material comprises scrap material, rock (e.g. crushed rock), or other low-cost filler material.

In one embodiment, the thermal filler material comprises metal ore, an alumina, a rock (e.g. basalt) or some other suitable filler. In the case of a metal ore, the metal ore may comprise an iron ore (e.g. magnetite, hematite or taconite).

In one embodiment, the thermal filler material comprises a recycled material (e.g. recycled metal such as scrap iron/steel or scrap cast iron or a recycled ceramic such as soda glass from bottles or jars).

In one embodiment, the thermal filler material has an effective (e.g. mean) particle size (e.g. diameter or width) greater than 5mm (e.g. greater than 7mm, e.g. greater than 10mm, e.g. greater than 20mm, e.g. greater than 40mm).

In one embodiment, the thermal filler material has an average (e.g. mean) particle size (e.g. diameter or width) in the range approximately 20-100mm (e.g. in the range approximately 30-70mm, e.g. approximately 50mm).

In one embodiment, the thermal filler material has an effective (e.g. mean) particle volume greater than 0.05 cm³ (e.g. greater than 0.15 cm³, e.g. greater than 0.5 cm³, e.g. greater than 5 cm³, e.g. greater than 30 cm³).

In one embodiment, the thermal filler material has an average (e.g. mean) particle volume in the range approximately 4-600 cm³ (e.g. in the range approximately 10-200 cm³, e.g. approximately 65 cm³).

In one embodiment, the thermal filler material comprises differently sized particles.

In the case ofthermal filler material in the form of blocks, the size ofthe thermal material may be larger to assist the arrangement of the blocks in a regular pattern or to utilize commercially available blocks. For example, the blocks may have an average (e.g. mean) volume in the range approximately 500-5000 cm³ (e.g. in the range 1000 - 4000 cm³, e.g. around 2500 cm³).

In one embodiment, the thermally conductive matrix makes up less than 50% of the (solid) volume of the body, e.g. less than 40% of the volume of the body, e.g. less than 35% of the volume of the body. Since the thermally conductive matrix is typically expected to be more expensive than the thermal filler material and have lower volumetric heat capacity than the thermal filler material, minimising the mass of the thermally conductive matrix is advantageous.

In one embodiment, the thermally conductive matrix material makes up approximately 20%-50% of the (solid) volume of the body, e.g. approximately 30%-40% of the volume of the body, e.g. approximately 35% of the volume of the body).

In one embodiment, the thermal transfer element comprises one or more of a heat input and a heat output.

According to the invention the thermal transfer element comprises a heat exchanger operative to transfer thermal energy between the body and a heat transfer fluid. In one embodiment, one or more of the heat input and heat output are provided via the heat exchanger.

In one embodiment, the heat input is direct heat input.

According to the invention the heat input comprises an electrical heating element (e.g. electrical heating coil/electrical heating coil means). According to the invention the heat output is a heat exchanger.

According to the invention the thermal transfer element is embedded within the thermally conductive matrix (e.g. embedded within the thermally conductive matrix core (e.g. cast in place through the thermally conductive matrix core or sandwiched between adjacent sections of thermally conductive matrix or sections of thermally conductive matrix core)) or attached to an external face of the thermally conductive matrix (e.g. attached to an external face of the thermally conductive matrix core).

In one embodiment, the thermal transfer element comprises one or more of an electrical heating element; and a heat exchanger operative to transfer thermal energy between the body and a heat transfer fluid.

According to the invention, the thermal transfer element comprises a heat exchanger operative: during a charging phase of the heat store to act as a heat input; and during a discharging phase of the heat store to transfer thermal energy from the body to the heat transfer fluid.

According to the invention, the thermal transfer element comprises: an electrical heating element (e.g. electrical heating coil/electrical heating coil means) operative during a charging phase of the heat store to act as a heat input; and a heat exchanger operative during a discharging phase of the heat store to transfer thermal energy from the body to the heat transfer fluid.

In one embodiment, the electrical heating element defines a (e.g. continuous) circuit path for electrical current (e.g. electrical heating current) to pass from outside ofthe body (e.g. outside of the thermally conductive matrix) to inside of the body (e.g. inside the thermally conductive matrix) and from inside the body (e.g. inside the thermally conductive matrix) to outside of the body (e.g. outside of the thermally conductive matrix). In one embodiment, the electrical heating element comprises an electrically conductive wire or equivalent structure.

In one embodiment, the heat exchanger defines a (e.g. continuous) flow path for the heat transfer fluid (e.g. heat transfer liquid or gas) to pass from outside of the body (e.g. outside of the thermally conductive matrix) to inside of the body (e.g. inside the thermally conductive matrix) and from inside the body (e.g. inside the thermally conductive matrix) to outside of the body (e.g. outside of the thermally conductive matrix).

In one embodiment, the electrical heating element (e.g. electrical heating coil/electrical heating coil means) and the heat exchanger are either embedded within the thermally conductive matrix (e.g. embedded within the thermally conductive matrix core) or attached to an external face of the thermally conductive matrix (e.g. attached to an external face of the thermally conductive matrix core). For example, in one embodiment one of the electrical heating element and the heat exchanger is embedded within the thermally conductive matrix (e.g. embedded within the thermally conductive matrix core) and the other is attached to an external face of the thermally conductive matrix (e.g. attached to an external face of the thermally conductive matrix core).

In the case of an electrical heating coil/electrical heating coil means, the electrical heating coil/electrical heating coil means may comprise one or more of: a looped coil profile (e.g. helical coil profile or other suitable looped profile); and a non-looped coil profile (e.g. straight profile).

In one embodiment, the electrical heating coil/electrical heating coil means comprises a resistive heating coil. However, conceivably an induction coil may also be used as an alternative to a resistive heating coil.

In one embodiment, the electrical heating coil/electrical heating coil means comprises an electrical heating wire (e.g. with an electrically insulative coating).

In one embodiment, the heat output is a direct heat output (e.g. body itself acts as the heat output, e.g. to air passing over external surfaces of the body).

In one embodiment, the body forms a stove surface for cooking (e.g. with the energy storage system being a cooking stove).

In one embodiment, the thermal transfer element (e.g. electrical heating element and/or heat exchanger) is embedded (e.g. cast in place) within the body, e.g. embedded (e.g. cast in place) within the thermally conductive matrix (e.g. within the thermally conductive matrix core).

In another embodiment, the thermal transfer element (e.g. electrical heating element or heat exchanger) is mounted externally of the body (e.g. externally of the thermally conductive matrix). For example, in one embodiment the thermal transfer element is attached (e.g. welded) to the body (e.g. attached to an external face (e.g. flat face) of the body, e.g. attached to an external face of the thermally conductive matrix (e.g. to an external face of the thermally conductive matrix core)), for example after casting.

In one embodiment, the heat exchanger comprises a first heat exchanger part operative to transfer thermal energy into the heat store and a second heat exchanger part operative to transfer thermal energy out of the heat store.

In one embodiment, the first heat exchanger part is operative to receive a first thermal transfer fluid and the second heat exchanger part is operative to receive a second thermal transfer fluid (e.g. of a different type to the first thermal transfer fluid).

In one embodiment, the heat exchanger comprises a heat exchanger pipe arrangement operative to receive a flow of a heat transfer fluid. In one embodiment, the heat exchanger pipe arrangement comprises one or more of: a looped pipe profile (e.g. coils, e.g. helical coil profile or other suitable looped profile); non-looped pipe profile (e.g. straight pipes).

In one embodiment, the heat exchanger pipe includes an inlet and an outlet.

In one embodiment, the thermal filler material has a thermal conductivity of approximately 0.5-1.5 W/m K (e.g. approximately 0.75 - 1.25 W/m K, e.g. approximately 1 W/m K).

In one embodiment, the thermal filler material has a thermal conductivity of approximately 0.5-2.5 W/m K (e.g. approximately 1.0 - 2.0 W/m K, e.g. approximately 1.5 W/m K).

In one embodiment, the thermally conductive matrix material has a thermal conductivity of approximately 100-400 W/m K (e.g. approximately 150-350 W/m K, e.g. approximately 200-300 W/m K, e.g. approximately 230 W/m K).

In one embodiment, the thermally conductive matrix material has a thermal conductivity of approximately 50-250 W/m K (e.g. approximately 75-200 W/m K, e.g. approximately 100-150 W/m K, e.g. approximately 125 W/m K).

In one embodiment, the body has a density of approximately 1-8 tonnes/m³ (e.g. approximately 2-8 tonnes/m³, e.g. approximately 2-7 tonnes/m³, e.g. approximately 3-6 tonnes/m³ or approximately 2.5-4 tonnes/m³, e.g. approximately 4 tonnes/m³).

In one embodiment, the thermal filler material has a density higher than the density of the thermally conductive matrix material when the thermally matrix material is molten.

In one embodiment, the body includes at least one area of solid (e.g. solid metal) to be machined (e.g. after casting). In this way, a heat exchange inlet and/or outlet pipe could be machined into the body.

In one embodiment, the heat store further comprises at least one additional body as previously defined.

In one embodiment, the at least one additional body is attached to the thermal transfer element (e.g. electrical heating element or heat exchanger). For example, the additional body may be mounted on an opposed side of the thermal transfer element to the first-defined body.

In one embodiment, the thermal transfer element (e.g. electrical heating element or heat exchanger) comprises a coiled member (e.g. wire or tube) coiled around an external periphery of the body (e.g. around an external periphery of the thermally conductive matrix). The coiled member may be a flexible coiled member. The coiled member may form a helical path around the body (e.g. around the thermally conductive matrix).

In one embodiment, an external periphery of the body is substantially cylindrical.

In one embodiment, the heat exchanger comprises a chamber housing the body, the chamber being configured to allow a heat transfer fluid to pass around surfaces (e.g. external surfaces) of the body.

In one embodiment, the chamber comprises an inlet for receiving a heat transfer fluid and an outlet.

In the case of a heat store comprising at least one additional body, the at least one additional body may be arranged (e.g. in a stacked formation) within the chamber whereby heat transfer fluid is able to pass around exposed sides of each body.

In accordance with a second aspect of the present invention, there is provided a heat storage system comprising a plurality of heat stores as defined in the first aspect of the present invention.

In one embodiment, the plurality of heat stores are connected in series.

In one embodiment, each heat store is thermally insulated from a neighbouring heat store.

In accordance with a third aspect of the present invention, there is provided an energy storage system comprising a heat store in accordance with the first aspect of the present invention or a heat storage system as defined in the second aspect of the present invention.

In one embodiment, the energy storage system is a power generation system (e.g. electricity storage system). In one embodiment, the electricity storage system is configured to convert energy (e.g. electrical energy) into thermal energy for storage during a charge cycle and to covert the stored thermal energy into electrical energy during a discharge cycle).

In one embodiment, the energy storage system is part of an industrial process (e.g. process requiring the selective or controlled release of heat). For example, the energy storage system may be a heat source system (e.g. selective or controlled heat source system) for an industrial process.

In one embodiment, the energy storage system is a domestic heating system.

In accordance with a fourth aspect of the present invention, there is provided a method of forming a heat store for an energy storage system according to claim 7.

In one embodiment, the thermal filler material is provided as a plurality of discrete elements.

In one embodiment, the plurality of discrete elements comprise particles (e.g. irregularly shaped particles).

In one embodiment, the plurality of discrete elements comprise blocks (e.g. stacked blocks).

In one embodiment, the thermal transfer element comprises one or more of: an electrical heating element (e.g. electrical heating coil/electrical heating coil means) and a heat exchanger (e.g. operative to transfer thermal energy between the body and a heat transfer fluid).

In one embodiment, the thermal transfer element comprises a heat exchanger operative: during a charging phase of the heat store to act as a heat input; and during a discharging phase of the heat store to transfer thermal energy from the body to the heat transfer fluid.

According to the invention, the thermal transfer element comprises: an electrical heating element (e.g. electrical heating coil/electrical heating coil means) operative during a charging phase of the heat store to act as a heat input; and a heat exchanger operative during a discharging phase of the heat store to transfer thermal energy from the body to the heat transfer fluid.

In one embodiment, the electrical heating element defines a (e.g. continuous) circuit path for electrical current (e.g. electrical heating current) to pass from outside ofthe body (e.g. outside of the thermally conductive matrix) to inside of the body (e.g. inside the thermally conductive matrix) and from inside the body (e.g. inside the thermally conductive matrix) to outside of the body (e.g. outside of the thermally conductive matrix). In one embodiment, the electrical heating element comprises an electrically conductive wire or equivalent structure.

In one embodiment, the heat exchanger defines a (e.g. continuous) flow path for the heat transfer fluid (e.g. heat transfer liquid or gas) to pass from outside of the body (e.g. outside of the thermally conductive matrix) to inside of the body (e.g. inside the thermally conductive matrix) and from inside the body (e.g. inside the thermally conductive matrix) to outside of the body (e.g. outside of the thermally conductive matrix).

In one embodiment, the electrical heating element (e.g. electrical heating coil/electrical heating coil means) and the heat exchanger are either embedded within the thermally conductive matrix (e.g. embedded within the thermally conductive matrix core) or attached to an external face of the thermally conductive matrix (e.g. attached to an external face of the thermally conductive matrix core). For example, in one embodiment one of the electrical heating element and the heat exchanger is embedded within the thermally conductive matrix (e.g. embedded within thermally conductive matrix core) and the other is attached to an external face of the thermally conductive matrix (e.g. to an external face of the thermally conductive matrix core).

In the case of an electrical heating coil/electrical heating coil means, the electrical heating coil/electrical heating coil means may comprise one or more of: a looped coil profile (e.g. helical coil profile or other suitable looped profile); and a non-looped coil profile (e.g. straight profile).

In one embodiment, the electrical heating coil/electrical heating coil means comprises a resistive heating coil.

In one embodiment, the electrical heating coil/electrical heating coil means comprises an electrical heating wire (e.g. with an electrically insulative coating).

In one embodiment, the heat exchanger comprises a first heat exchanger part operative to transfer thermal energy into the heat store and a second heat exchanger part operative to transfer thermal energy out of the heat store.

In one embodiment, the first heat exchanger part is operative to receive a first thermal transfer fluid and the second heat exchanger part is operative to receive a second thermal transfer fluid (e.g. of a different type to the first thermal transfer fluid).

In one embodiment, the heat exchanger comprises a heat exchanger pipe arrangement operative to receive a flow of a heat transfer fluid. In one embodiment, the heat exchanger pipe arrangement comprises one or more of a looped pipe profile (e.g. coils, e.g. helical coil profile or other suitable looped profile); non-looped pipe profile (e.g. straight pipes).

In one embodiment, the heat exchanger pipe includes an inlet and an outlet.

In one embodiment, the step of providing the thermal transfer element (e.g. electrical heating element or heat exchanger) comprises providing the thermal transfer element in the mould prior to adding the molten thermally conductive matrix material to the mould.

In one embodiment, the thermal transfer element (e.g. electrical heating element or heat exchanger) is provided with a protective coating to protect the thermal transfer element from the molten thermally conductive matrix material.

In one embodiment, the method comprises positioning the thermal transfer element (e.g. electrical heating element or heat exchanger) within the mould and then subsequently adding the solid (e.g. particulate) thermal filler material to the mould.

In one embodiment, the step of providing the thermal transfer element (e.g. electrical heating element or heat exchanger) comprises attaching (e.g. welding) the thermal transfer element to the body (e.g. to the thermally conductive matrix) after the thermally conductive matrix material has solidified.

According to the invention, the thermal transfer element (e.g. electrical heating element or heat exchanger) is actively cooled during the casting process (e.g. to minimise exposure of the thermal transfer element to molten thermally conductive matrix material and/or cool the body).

In one embodiment, the method further comprises heating the thermal transfer element (e.g. electrical heating element or heat exchanger) and thermal filler material (e.g. to a temperature similar to the temperature of the molten thermally conductive matrix material to be added) and adding the molten thermally conductive matrix material.

In one embodiment, the body is cast in a plurality of stages such that the body is built up in layers (e.g. to assist the casting process or to allow the formation of different layers).

In one embodiment, the method is used to form a heat store in accordance with the first aspect of the invention (e.g. with the thermally conductive matrix and thermal filler material as defined in any embodiment of the first aspect of the present invention).

Typically all aspects of the invention involve casting a conducting metal, over a low-cost fill material and, in certain embodiments, adding a heat exchanger to form a solid block with good heat storage and good heat transfer properties. An ideal conducting material is pure aluminium, which has excellent thermal conductivity (200 times better than concrete) and when it has solidified acts as both structural support and a heat transport network throughout the thermal storage block. If aluminium is used then it is preferably recycled and will probably be made up of aluminium alloys, which tend to have lower thermal conductivities than pure aluminium. Pure aluminium melts at approximately 660 °C and aluminium alloys melt at lower temperatures, which means that aluminium and aluminium alloys can be cast into simple steel containers. The low melting point also means that the energy and technology required to melt the aluminium is low compared to melting steel or cast iron. Furthermore, when the thermal storage block has reached the end of its useful life the aluminium or aluminium alloy can potentially be recovered and reused. A further benefit of both aluminium and aluminium alloys is that they have a good specific heat capacity. For the avoidance of doubt where aluminium is referred to in this patent it can be either pure aluminium or an aluminium alloys. The low-cost fill material be scrap metal, rock, high density brick or else some form of suitable material with low cost and high energy density. The fill material can be one material or a combination of different materials.

The fill material can be an iron ore, such as magnetite, hematite or taconite, an alumina, a rock such as basalt or some other suitable filler, such as a cast magnetite brick. It can also be a recycled metal such as scrap iron/steel or scrap cast iron or a recycled ceramic such as soda glass from bottles or jars.

This combination of conducting metal and filler can be referred to as a solid metal composite. The invention involves using the material over a temperature range where it all remains in a solid phase. Above about 400 °C the aluminium will become start to soften and may start to lose some structural integrity. This may not be an issue if the aluminium is housed within a container (e.g. steel container) but could cause issues over time if the aluminium is self-supporting.

A method of adding and removing heat to a block can be via a heat transfer fluid. Heat transfer oils can be used from ambient to 400 °C. Molten salts can go over this temperature as a heat transfer fluid. Water/steam can also be a heat transfer fluid. Pressurised gases, such as CO₂, can work over a very wide range of temperatures. Some pressurised gases (e.g. compressed helium) can also be used at temperatures below ambient and down to cryogenic temperatures if required.

The use of aluminium as the conducting metal with high thermal conductivity means that the heat exchange from the fluid to the block is improved. For example, concrete has a thermal conductivity of approximately 1 W/m K, whereas pure aluminium is 230 W/m K. This means that a 1cm thickness of concrete has the same thermal resistance as 230cm thickness of pure aluminium. The result of this high conductivity is that the aluminium can act as a heat transfer network around the much cheaper fill material.

If aluminium is used then heating can be achieved via the use of an electrical heating element (e.g. electrical heating coil).

If aluminium and crushed magnetite ore are used to form the solid metal composite then the material has a density of approximately 4 tons/m³. Each ton if heated and cooled from 400 °C to 100 °C can store 75kWh of thermal energy. In a 40ft container this would result in a storage capacity of close to 19MWh thermal. This is extremely energy dense with no risk of spillage or leakage of fluids.

If aluminium and crushed basalt rock are used to form the solid metal composite then the material may have a density of approximately 2.7 tonnes/m³.

It is preferable that the fill material is denser than the conducting metal so that it does not float while the conducting metal is being poured. Where the fill material is less dense it is necessary to constrain the fill material while the conducting metal is being cast or the conducting metal will settle at the bottom of the vessel and the fill material will rise to the top with no conducting metal around it to act as a heat transfer network.

Where the packing is random particles of the same size, the packing density is not altered by the particle size. On average the void space in this situation (occupied by the conducting metal) will be around 35% of the volume. Advantageously, if particles of different sizes are used then the void space can be reduced. It is preferable that the filler particles are not too small, hence in a preferred embodiment the filler particles average size is greater than 5mm, greater than 7mm, and greater than 10mm. This minimum size is to ensure that the aluminium has sufficient structural integrity that it can hold the thermal block together. In addition, it avoids issues with surface tension of the liquid aluminium that can make it difficult to wet small particles.

The thermal storage may be made with different size particles in the same storage unit and may be poured/cast in a number of different stages. The units may contain areas of solid metal that can be machined post casting. This could be to machine a heat exchange inlet and/or outlet pipe, for example, into the unit.

The filler material can also be made of regular shaped objects such as cast high density bricks. These structured filler materials can be arranged in such a way that the void space is minimised, the thermal conductivity maximised or a combination of both. For example the high density bricks could be bonded magnetite bricks.

The heat exchanger can be embedded within the thermal block (e.g. cast in place) or it can be attached to the block afterwards. This might occur where there is a flat side to the heat storage block or where the heat exchanger is wrapped around a circular block.

Molten aluminium will react with most metals, consequently it is preferable that if the heat exchanger is cast in place the material has some sort of protective layer or coating to resist the aluminium while it is in liquid form. There are a number of different ways of protecting steel, for example graphite coating, chrome plating or even hot aluminium dips. The heat exchanger can be made from a range of different materials depending upon the application and the heat transfer fluid.

The heat exchanger may be actively cooled as part of the casting process. For example, if the heat exchanger tube is made of aluminium it might melt during the casting process. This can be avoided if it is continuously cooled - for example with cold air blown through the heat exchanger while pouring the aluminium. Likewise, in order to reduce the time for the molten aluminium to react with a steel heat exchanger, if used, it may be beneficial to cool the heat exchanger after pouring. This will rapidly solidify the aluminium around the tube and ensure that the time during which the aluminium can react with the tube is minimised.

There are many different options for heat exchangers from coils (e.g. helical coils) to straight pipes and including, as mentioned above, heat exchangers externally attached to the outside of the blocks. When externally attached there should be good thermal contact between the block and the heat exchanger.

It is preferable to cool the conducting metal from the inside out by cooling the heat exchangers after pouring. In this way the conducting metal will go solid from the centre outwards and minimise effects of shrinkage.

Aluminium appears to have better properties as a conducting metal than other metals, such as cast iron, in this application. The density of the cast iron means that for the same void space almost 3 times as much mass of cast iron is required to fill the space. The temperatures and energy required for cast iron are much higher and both the heat capacity and thermal conductivity of cast iron are lower. Aluminium is also very unreactive with the environment and should survive in this application for many years. Furthermore, it is ductile which allows it to manage the thermal stresses from heating and cooling.

Embodiments will now be described by way of example with reference to the accompanying drawings in which:
Figure 1 is a schematic illustration of an energy storage system incorporating a heat store;
Figure 2 is a schematic cross-sectional view of a heat store for use in the energy storage system of Figure 1 in accordance with a first embodiment ;
Figure 3 is a schematic perspective view of the heat store of Figure 2 showing its constituent parts;
Figure 4 is a schematic cross-sectional view of the heat store of Figure 2 forming part of a series of heat stores;
Figures 5a and 5b are a schematic perspective views of a heat store for use in the energy storage system of Figure 1 in accordance with a second embodiment;
Figure 5c is a schematic perspective view of a heat store for use in the energy storage system of Figure 1 in accordance with a third embodiment;
Figure 6 is a schematic perspective view of a heat store for use in the energy storage system of Figure 1 in accordance with a fourth embodiment;
Figure 7 is a schematic cross-sectional view of a heat store for use in the energy storage system of Figure 1 in accordance a fifth embodiment;
Figure 8 is a schematic cross-sectional view of a heat store for use in the energy storage system of Figure 1 in accordance a sixth embodiment;
Figure 9 is a schematic cross-sectional view of a heat store for use in the energy storage system of Figure 1 in accordance a seventh embodiment disclosing the invention;
Figure 10 is a schematic cross-sectional view of a heat store for use in the energy storage system of Figure 1 in accordance an eighth embodiment; and
Figure 11 is a schematic cross-sectional plan view of a heat store for use in the energy storage system of Figure 1 in accordance with a ninth embodiment.

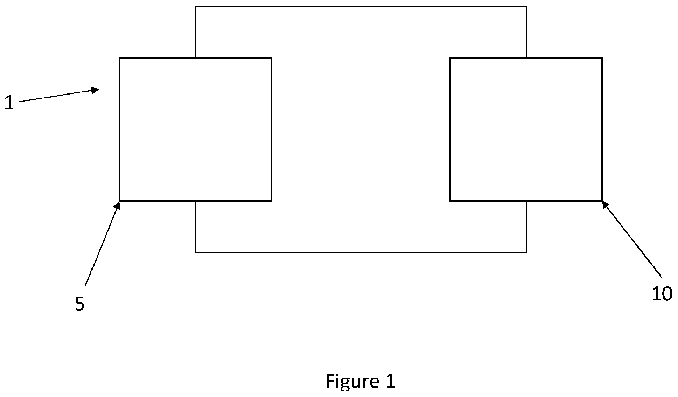

Figure 1 shows an energy storage system 1 comprising a heat generation stage 5 and a heat store 10.

The energy storage system 1 may be a power generation system (e.g. system operative to convert power into heat for storage during a charging phase and operative to convert stored heat into power (e.g. electrical power) during a discharging phase - such as an electricity storage system) or may be part of an industrial process or a domestic heating system. The heat generation stage 5 may take a variety of forms depending upon the type of energy storage system 5.

In the case of a power generation system, the heat generation stage 5 may comprise a working fluid cycle operative to compress a working fluid during the charging phase and operative to expand a working fluid during the discharging phase to generate power. The heat store 10 may be operative to receive thermal energy from the working fluid cycle during the charging phase and operative to transfer thermal energy to the working fluid cycle during the discharging phase.

One example of such a process is an adiabatic compressed air energy storage system, such as the system described in the 2006 paper titled "Adiabatic Compressed Air Energy Storage for the Grid Integration of Wind Power" by Stefan Zunft, Christoph Jakiel, Martin Koller and Chris Bullough. This paper describes using a pressurised store and transferring the heat directly between the air (working fluid) and the solid storage media. The design and manufacture of the pressure vessel at this scale and temperature is technically extremely challenging and the potential cost made the proposed system uneconomic using conventional heat store technology. Other types of electricity storage systems include concentrating solar power plants with molten salt, pumped heat energy storage system and liquid air energy storage systems.

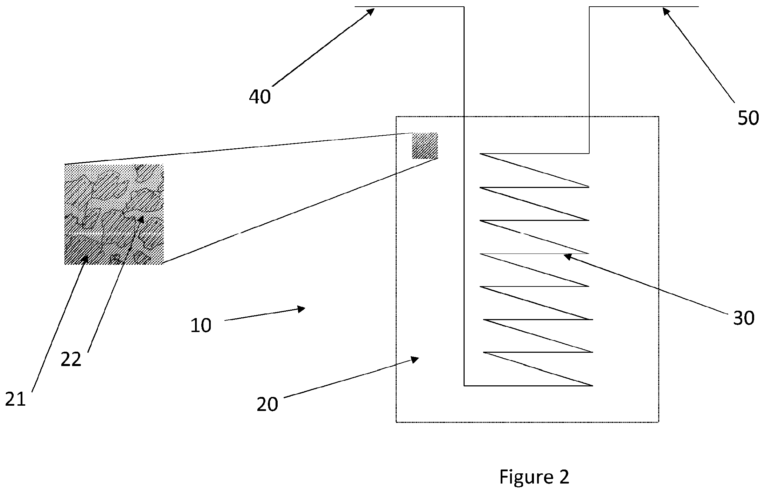

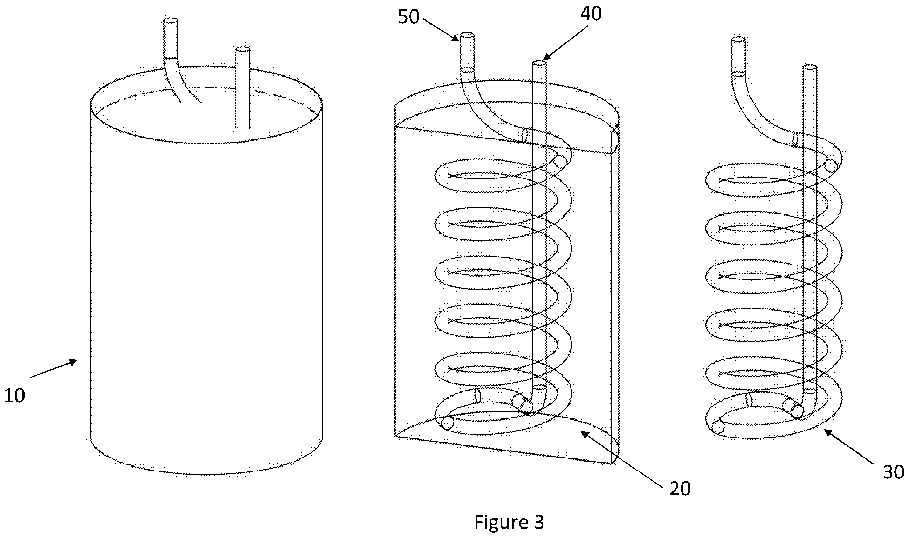

Figures 2 and 3 show a first embodiment of a sensible heat thermal storage system 10 comprising a solid metal composite block 20, and an embedded coiled heat exchanger 30, a heat transfer fluid inlet 40, and a heat transfer fluid outlet 50.

As illustrated in Figure 2, in this example the solid metal composite block 20 is made up of a solid aluminium matrix 22 surrounding (low-cost) irregularly-shaped solid magnetite particles 21 embedded in the matrix. Solid metal composite block 20 is formed by casting molten aluminium over the magnetite particles 21 whilst coiled heat exchanger 30 is in place to form a solid block with good heat storage and good heat transfer properties. The solid magnetite particles 21 have a higher melting point than the solid aluminium matrix 22 and therefore remain solid both during the casting process and during operation of the thermal storage system 10.

When charging the thermal storage, hot heat transfer fluid enters through inlet 40 and is cooled as it passes through heat exchanger 30 before leaving the thermal storage via outlet 50. The thermal energy is transferred from the heat transfer fluid via heat exchanger 30 to solid metal composite block 20. Solid metal composite block 20 has good thermal conductivity as has been previously described and hence the heat flows rapidly from the heat exchanger 30 to all parts of the solid metal composite block 20.

When discharging the thermal storage, cool heat transfer fluid enters in reverse through outlet 50 and is heated as it passes through heat exchanger 30 before leaving the thermal storage via inlet 40. The thermal energy is transferred to the heat transfer fluid via heat exchanger 30 from solid metal composite block 20. Solid metal composite block 20 has good thermal conductivity as has been previously described and hence the heat flows rapidly from all parts of the solid metal composite block 20 to the heat exchanger 30.

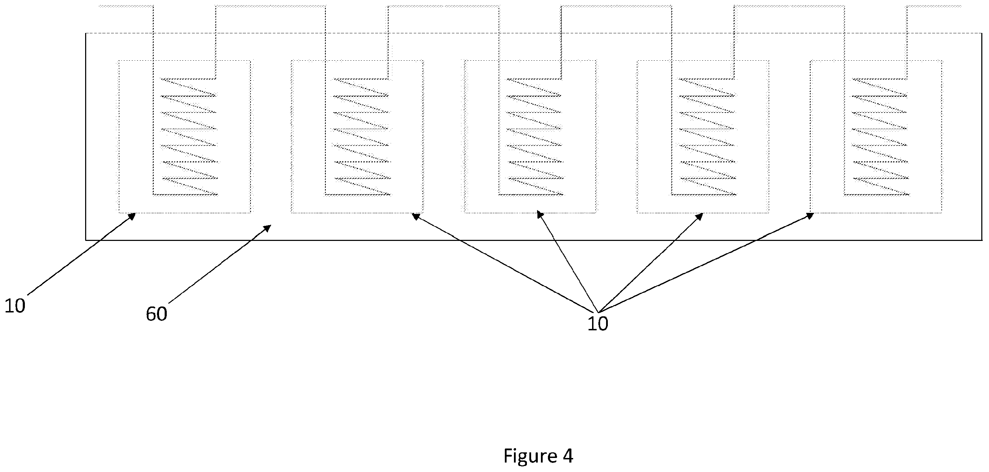

Figure 4 shows a version of sensible thermal storage system 10 comprising a plurality of solid metal composite blocks 20 connected in series with insulation 60 provided around the blocks 20. The provision of insulation breaks between blocks allows for a temperature front to be generated in multiple blocks. Due to the high thermal conductivity of the aluminium any individual block will tend to settle at an average temperature when not charging or discharging. The use of multiple blocks with insulation will tend to reduce the temperature difference between the thermal fluid and the solid metal composite block 20. It is analogous to a thermal front travelling through a packed bed and can improve the efficiency of the heat transfer process.

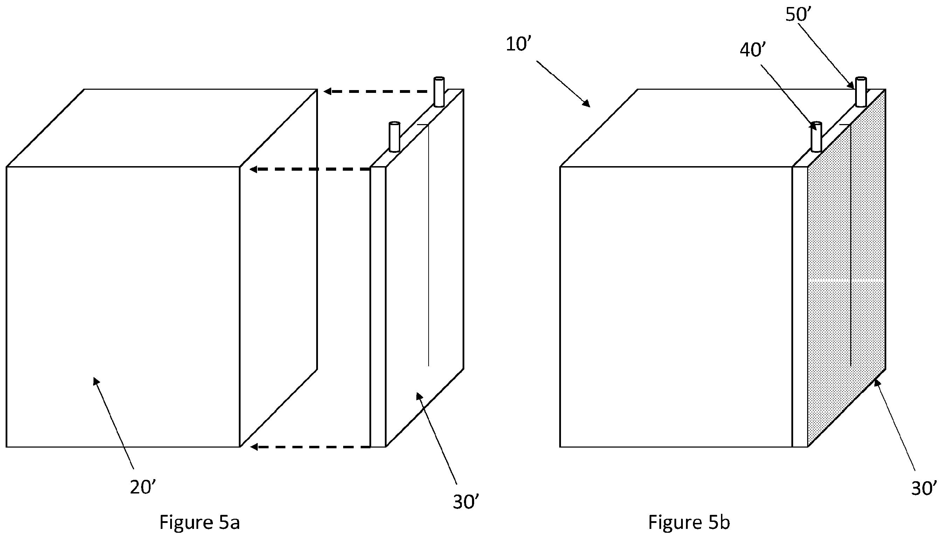

Figures 5a and 5b show an alternative heat store 10' based on heat store 10 shown in Figure 2, heat store 10' comprising a solid metal composite block 20' formed in accordance with blocks 20 of heat store 10, an external heat exchanger 30', heat transfer fluid inlet 40' and outlet 50'. In this case the solid metal composite block 20' is cast as a block with flat sides and the external heat exchanger 30' is bonded or otherwise attached to one face of the block 20'. Figure 5a shows the heat exchanger 30' separate from the solid metal composite block 20' prior to attachment.

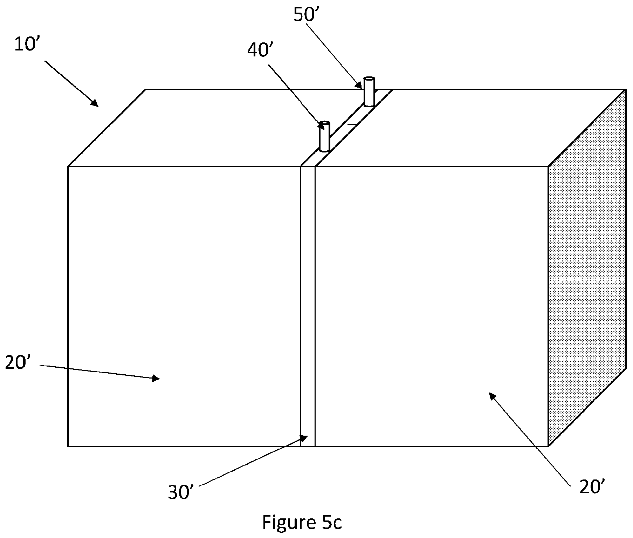

Figure 5c shows heat store 10' with an additional solid metal composite block 20' is attached to the other side of heat exchanger 30'. The blocks could be welded to the heat exchanger. Alternatively the heat exchanger channels could be cast into the blocks. The inlet and outlet pipes could be welded to one block and then both blocks welded together. In this way the heat exchanger is low cost and integral to the blocks.

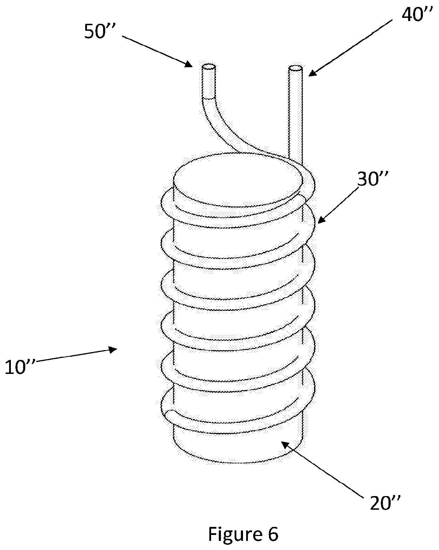

Figure 6 shows an alternative arrangement based on the embodiment of Figure 3 (features in common are labelled accordingly) in which the coiled heat exchanger 30" is mounted externally of a cylindrical solid metal composite block 20''. In one embodiment, the coiled heat exchanger 30" may be a flexible heat exchanger wrapped around the outside of the block. The heat exchanger may be held in place by tensioning straps or else bonded to the surface of the block. If held in place with tensioning straps this can allow for differing thermal expansions.

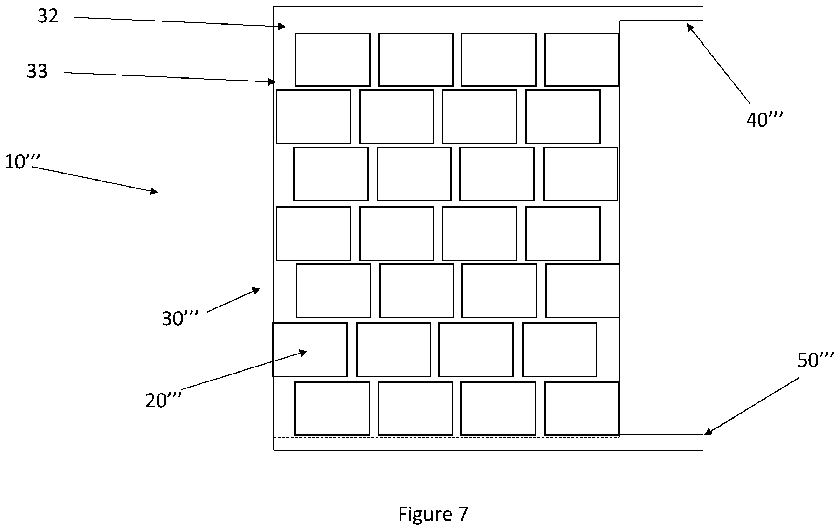

Figure 7 shows an alternative embodiment of a heat store 10‴ comprising a plurality of solid metal composite blocks 20‴ (each formed in accordance with block 20 of heat store 10) and a heat exchanger 30‴ comprising a container 33 filled with a heat transfer fluid 32, an inlet 40‴ and an outlet 50"'. As illustrated, the plurality of solid metal composite blocks 20‴ are stacked within container 33 and surrounded by heat transfer fluid 32.

When charging the thermal storage, hot heat transfer fluid enters through inlet 40‴ and is cooled as it passes around solid metal composite blocks 20‴ before leaving the thermal storage via outlet 50‴. The thermal energy is transferred from the heat transfer fluid 32 to solid metal composite blocks 20‴. Solid metal composite blocks 20‴ have good thermal conductivity as has been previously described. The blocks 20‴ are stacked in such a way that the fluid passes evenly around the different blocks.

When discharging the thermal storage, cool heat transfer fluid 32 enters in reverse through outlet 50‴ and is heated as it passes solid metal composite blocks 20‴ before exiting via inlet 40‴. The thermal energy is transferred to the heat transfer fluid 32 from solid metal composite blocks 20‴.

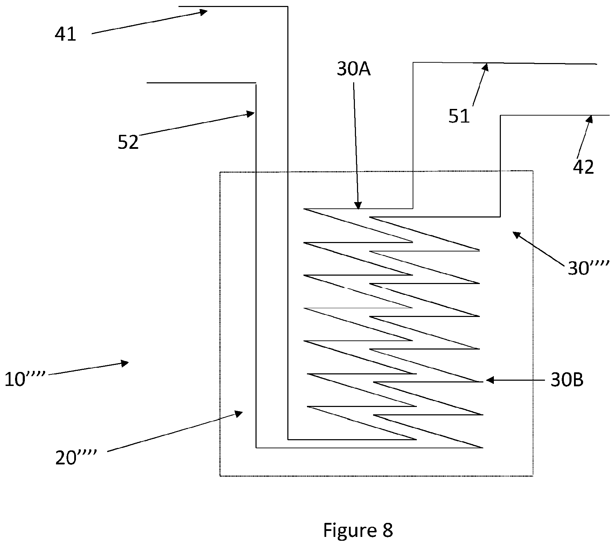

Figure 8 shows a further embodiment of a sensible heat thermal store 10"" comprising a solid metal composite block 20ʺʺ (formed in accordance with block 20 of heat store 10), and a heat exchanger 30"" comprising a first embedded heat exchanger 30A having a first heat transfer fluid inlet 41 and a first heat transfer fluid outlet 51, and a second embedded heat exchanger 30B having a second heat transfer fluid inlet 42 and a second heat transfer outlet 52.

When charging the thermal storage, a hot heat transfer fluid enters through inlet 41 and is cooled as it passes through first heat exchanger 30A before leaving the thermal store 10'''' via outlet 51. The thermal energy is transferred from the heat transfer fluid via first heat exchanger 30A to solid metal composite block 20"". Solid metal composite block 20"" has good thermal conductivity as has been previously described and hence the heat flows rapidly from the first heat exchanger 30A to all parts of the solid metal composite block 20"".

When discharging the thermal storage, a cool heat transfer fluid, which can be different to the heat transfer fluid used for charging, enters through inlet 42 and is heated as it passes through second heat exchanger 30B before leaving the thermal store 10"" via outlet 52. The thermal energy is transferred to the heat transfer fluid via second heat exchanger 30B from solid metal composite block 20"". Solid metal composite block 20ʺʺ has good thermal conductivity as has been previously described and hence the heat flows rapidly from all parts of the solid metal composite block 20ʺʺ to second heat exchanger 30B.

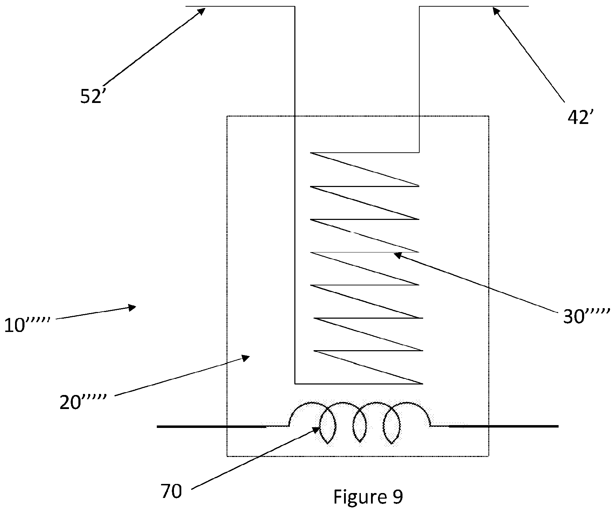

Figure 9 shows an embodiment disclosing the invention of a sensible heat thermal store 10‴ʺ comprising a solid metal composite block 20‴ʺ (formed in accordance with block 20 of heat store 10), an embedded heat exchanger 30‴ʺ, heat transfer fluid inlet 42' and outlet 52' and an embedded electric heating element 70.

Electric heating element 70 is embedded within the matrix of solid metal composite block 20‴ʺ but electrically isolated from the block 20‴ʺ (e.g. by means of an electrically insulative coating) such that when an electrical current passes through electric heating element 70 the current does not pass through the block. When charging the thermal storage electricity is passed through the electric element 70, which heats the electric heating element 70. Typically heating is achieved via resistive heating. The thermal energy is transferred to the solid metal composite block 20‴ʺ and hence the heat flows rapidly from the electric heating element 70 to all parts of the solid metal composite block 20‴ʺ.

When discharging the thermal storage, a cool heat transfer fluid enters through inlet 42' and is heated as it passes through heat exchanger 30‴ʺ before leaving the thermal storage via outlet 52'. The thermal energy is transferred to the heat transfer fluid via heat exchanger 30‴ʺ from solid metal composite block 20‴ʺ.

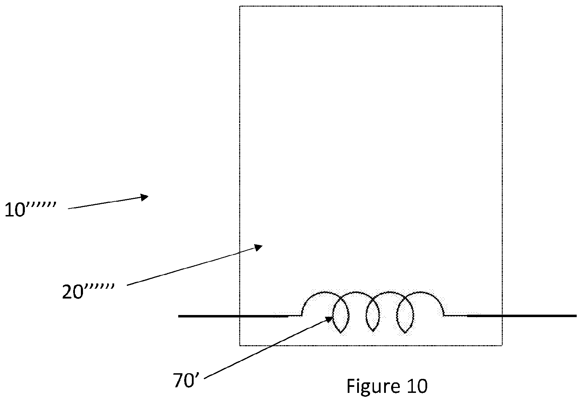

Figure 10 shows a further embodiment of a sensible heat thermal storage system 10‴‴ comprising a solid metal composite block 20‴‴ (formed in accordance with block 20 of heat store 10) and an electric heating element 70' embedded within the matrix of solid metal composite block 20‴‴.

When charging the thermal storage electricity is passed through the electric heating element 70, which heats the electric heating element 70. The thermal energy is transferred to the solid metal composite block 20 and hence the heat flows rapidly from the electric heating element 70 to all parts of the solid metal composite block 20.

When discharging the thermal storage either a cool gas or solid object is put in contact with the solid metal composite and heat is transferred from the solid metal composite to the gas or solid object. For example the gas could be air that needs to be warmed and is blown over the solid metal composite. Alternatively, the solid metal composite might supply heat to a stove surface or even be the stove surface for cooking.

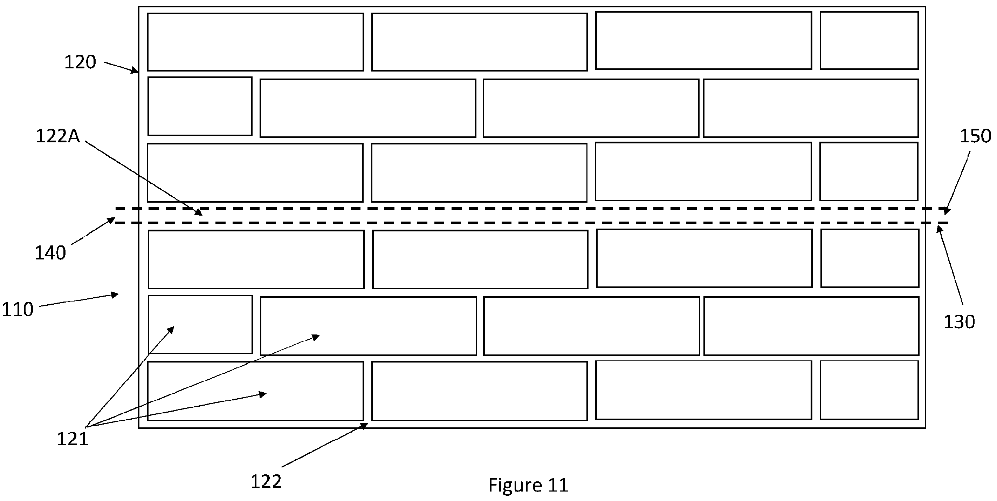

Figure 11 shows a yet further embodiment of a sensible heat thermal storage system 110 comprising a solid metal composite block 120, an embedded (e.g. straight) heat exchanger pipe 130, a heat transfer fluid inlet 140, and a heat transfer fluid outlet 150.

In this example the solid metal composite block 120 is made up of a solid aluminium matrix 122 surrounding an ordered arrangement of magnetite bricks 121 embedded in the matrix. Block 120 includes a thicker solid aluminium section 122A in which heat exchanger pipe 130 is embedded. Solid metal composite block 120 is formed by casting molten aluminium over the magnetite bricks 121 whilst heat exchanger 130 is in place to form a solid block with good heat storage and good heat transfer properties. The solid magnetite bricks 121 have a higher melting point than the solid aluminium matrix 122 and therefore remain solid both during the casting process and during operation of the thermal storage system 110.

Figure 11 is a view from above and shows how the magnetite bricks 121 are arranged within the matrix such that each face of each brick may be exposed to the matrix 122. In one embodiment, the magnetite bricks 121 are a 230mm x 190mm x 50 mm in size and 7.5 kg in weight (per brick), equivalent to a volume of around 2200 cm³ per brick. This corresponds to a commercially available magnetite storage heater bricks. Of course, other sizes of bricks (smaller or larger) may be used.

When charging the thermal storage, hot heat transfer fluid enters through inlet 140 and is cooled as it passes through heat exchanger 130 before leaving the thermal storage via outlet 150. The thermal energy is transferred from the heat transfer fluid via heat exchanger 130 to solid metal composite block 120. Solid metal composite block 120 has good thermal conductivity as has been previously described and hence the heat flows rapidly from the heat exchanger 130 to all parts of the solid metal composite block 120.

When discharging the thermal storage, cool heat transfer fluid enters in reverse through outlet 150 and is heated as it passes through heat exchanger 130 before leaving the thermal storage via inlet 140. The thermal energy is transferred to the heat transfer fluid via heat exchanger 130 from solid metal composite block 120.

## Claims

1. A heat store (10‴ʺ) for an energy storage system, comprising:
a solid body (20‴ʺ) comprising a solid thermally conductive metal matrix (22) with a solid thermal filler material (21) embedded therein, the solid thermally conductive metal matrix (22) forming a thermally conductive pathway to the solid thermal filler material (21) distributed within the solid thermally conductive metal matrix (22); and
a thermal transfer element comprising a heat exchanger (30‴ʺ) embedded within the solid thermally conductive metal matrix (22);
**characterised in that** the thermal transfer element further comprises an electrical heating coil means (70) embedded within the solid thermally conductive metal matrix (22) and operative during a charging phase of the heat store (10‴ʺ) to act as a heat input; and
**in that** the heat exchanger (30‴ʺ) embedded within the solid thermally conductive metal matrix (22) is operative during a discharging phase of the heat store (10‴ʺ) to transfer thermal energy from the solid body (20‴ʺ) to a heat transfer fluid.

2. A heat store (10‴ʺ) according to claim 1, wherein:
the solid thermal filler material (21) has a melting point that is higher than the melting point of the solid thermally conductive metal matrix (22) such that the thermal filler material (21) will remain solid during operation of the heat store (10‴ʺ) as the heat store (10‴ʺ) is thermally cycled between upper and lower temperature levels of a temperature range; and
the solid body (20‴ʺ) is housed in a container configured to provide structural support for the solid body (20‴ʺ)during at least a part of the temperature range.

3. A heat store (10‴ʺ) according to claim 1 or claim 2, wherein the solid thermally conductive metal matrix (22) comprises a solid aluminium matrix.

4. A heat store (10‴ʺ) according to any of the preceding claims, wherein the solid thermally conductive metal matrix (22) has a substantially higher thermal conductivity than the solid thermal filler material (21).

5. A heat store (10‴ʺ) according to any of the preceding claims, wherein the solid thermal filler material (21) comprises a plurality of discrete elements interspersed within the solid thermally conductive metal matrix, wherein the plurality of discrete elements comprise irregularly-shaped particles or stacked blocks.

6. An energy storage system comprising a heat store (10‴ʺ) as defined in any of the preceding claims.

7. A method of forming a heat store for an energy storage system, comprising:
combining molten thermally conductive matrix material with solid thermal filler material in a mould; and
allowing the thermally conductive matrix material to solidify to form a solid body comprising a solid thermally conductive matrix with the solid thermal filler material embedded therein; and
providing a thermal transfer element in thermal connection to the solid thermally conductive matrix;
wherein the thermal transfer element comprises an electrical heating coil means and a heat exchanger operative to transfer thermal energy between the solid body and a heat transfer fluid; and
wherein the thermal transfer element is actively cooled during the casting process.

8. A method according to claim 7, wherein the solid thermal filler material is provided as a plurality of discrete elements, wherein the plurality of discrete elements comprise irregularly-shaped particles or stacked blocks.

9. A method according to any of claims 7-8 wherein the step of providing the thermal transfer element comprises providing the thermal transfer element in the mould prior to adding the molten thermally conductive matrix material to the mould.

10. A method according to any of claims 7-9, wherein the thermal transfer element is provided with a protective coating to protect the thermal transfer element from the molten thermally conductive matrix material.

11. A method according to any of claims 7-10, wherein the method comprises positioning the thermal transfer element within the mould and then subsequently adding the solid thermal filler material to the mould.

12. A method according to any of claims 7-11, wherein the method further comprises heating the thermal transfer element and solid thermal filler material and adding the molten thermally conductive matrix material.

13. A method according to any of claims 7-12, wherein the solid body is cast in a plurality of stages such that the solid body is built up in layers.

## Patentansprüche

1. Hitzespeicher (10‴ʺ) für ein Energiespeichersystem, umfassend:
einen festen Körper (20‴ʺ), der eine feste thermisch leitende Metallmatrix (22) mit einem darin eingebetteten festen thermischen Füllmaterial (21) umfasst, wobei die feste thermisch leitende Metallmatrix (22) einen thermisch leitenden Weg zu dem festen thermischen Füllmaterial (21) bildet, das innerhalb der festen thermisch leitenden Metallmatrix (22) verteilt ist; und
ein Wärmeübertragungselement, das einen Wärmetauscher (30‴ʺ) umfasst, der innerhalb der festen thermisch leitenden Metallmatrix (22) eingebettet ist;
**dadurch gekennzeichnet, dass** das Wärmeübertragungselement ferner ein elektrisches Heizspulenmittel (70) umfasst, das in die feste thermisch leitende Metallmatrix (22) eingebettet ist und während einer Ladephase des Hitzespeichers (10‴ʺ) wirksam ist, um als eine Wärmeeingabe zu fungieren; und
dass der Wärmetauscher (30‴ʺ), der innerhalb der festen thermisch leitenden Metallmatrix (22) eingebettet ist, während einer Entladephase des Hitzespeichers (10‴ʺ) wirksam ist, um Wärmeenergie von dem festen Körper (20""') auf ein Wärmeübertragungsfluid zu übertragen.

2. Hitzespeicher (10‴ʺ) nach Anspruch 1, wobei:
das feste thermische Füllmaterial (21) einen Schmelzpunkt aufweist, der höher als der Schmelzpunkt der festen thermisch leitenden Metallmatrix (22) ist, sodass das thermische Füllmaterial (21) während des Betriebs des Hitzespeichers (10""') fest bleibt, wenn der Hitzespeicher (10‴ʺ) einem thermischen Zyklus zwischen einem oberen und einem unteren Temperaturniveau eines Temperaturbereichs unterzogen wird; und
der feste Körper (20‴ʺ) in einem Behälter untergebracht ist, der dazu konfiguriert ist, eine strukturelle Unterstützung für den festen Körper (20‴ʺ) während mindestens eines Teils des Temperaturbereichs bereitzustellen.

3. Hitzespeicher (10‴ʺ) nach Anspruch 1 oder Anspruch 2, wobei die feste thermisch leitende Metallmatrix (22) eine feste Aluminiummatrix umfasst.

4. Wärmespeicher (10‴ʺ) nach einem der vorhergehenden Ansprüche, wobei die feste thermisch leitende Metallmatrix (22) eine wesentlich höhere thermische Leitfähigkeit als das feste thermische Füllmaterial (21) aufweist.

5. Hitzespeicher (10‴ʺ) nach einem der vorhergehenden Ansprüche, wobei das feste thermische Füllmaterial (21) eine Vielzahl von diskreten Elementen umfasst, die innerhalb der festen thermisch leitenden Metallmatrix vermischt sind, wobei die Vielzahl von diskreten Elementen unregelmäßig geformte Partikel oder gestapelte Blöcke umfasst.

6. Energiespeichersystem, umfassend einen Hitzespeicher (10‴ʺ) nach einem der vorhergehenden Ansprüche.

7. Verfahren zum Bilden eines Hitzespeichers für ein Energiespeichersystem, umfassend:
Kombinieren von geschmolzenem thermisch leitendem Matrixmaterial mit festem thermischem Füllmaterial in einer Form; und
Ermöglichen, dass sich das thermisch leitende Matrixmaterial verfestigt, um einen festen Körper zu bilden, der eine feste thermisch leitende Matrix mit dem darin eingebetteten festen thermischen Füllmaterial umfasst; und
Bereitstellen eines Wärmeübertragungselements in thermischer Verbindung mit der festen thermisch leitenden Matrix;
wobei das Wärmeübertragungselement ein elektrisches Heizspulenmittel und einen Wärmetauscher umfasst, der wirksam ist, um Wärmeenergie zwischen dem festen Körper und einem Wärmeübertragungsfluid zu übertragen; und
wobei das Wärmeübertragungselement während des Gießprozesses aktiv gekühlt wird.

8. Verfahren nach Anspruch 7, wobei das feste thermische Füllmaterial als eine Vielzahl von diskreten Elementen bereitgestellt wird, wobei die Vielzahl von diskreten Elementen unregelmäßig geformte Partikel oder gestapelte Blöcke umfasst.

9. Verfahren nach einem der Ansprüche 7 bis 8,
wobei der Schritt des Bereitstellens des Wärmeübertragungselements das Bereitstellen des Wärmeübertragungselements in der Form vor dem Hinzufügen des geschmolzenen thermisch leitenden Matrixmaterials zu der Form umfasst.

10. Verfahren nach einem der Ansprüche 7 bis 9,
wobei das Wärmeübertragungselement mit einer Schutzbeschichtung versehen ist, um das Wärmeübertragungselement vor dem geschmolzenen thermisch leitenden Matrixmaterial zu schützen.

11. Verfahren nach einem der Ansprüche 7 bis 10,
wobei das Verfahren das Positionieren des Wärmeübertragungselements innerhalb der Form und anschließend das Hinzufügen des festen thermischen Füllmaterials zu der Form umfasst.

12. Verfahren nach einem der Ansprüche 7 bis 11,
wobei das Verfahren ferner das Erhitzen des Wärmeübertragungselements und des festen thermischen Füllmaterials und das Hinzufügen des geschmolzenen thermisch leitenden Matrixmaterials umfasst.

13. Verfahren nach einem der Ansprüche 7 bis 12,
wobei der feste Körper in einer Vielzahl von Stufen gegossen wird, sodass der feste Körper in Schichten aufgebaut ist.

## Revendications

1. Accumulateur de chaleur (10‴ʺ) pour un système de stockage d'énergie, comprenant :
un corps solide (20‴ʺ) comprenant une matrice métallique thermoconductrice solide (22) avec un matériau de remplissage thermique solide (21) intégré dans celle-ci, la matrice métallique thermoconductrice solide (22) formant un chemin thermoconducteur vers le matériau de remplissage thermique solide (21) réparti à l'intérieur de la matrice métallique thermoconductrice solide (22) ; et
un élément de transfert thermique comprenant un échangeur de chaleur (30‴ʺ) intégré à l'intérieur de la matrice métallique thermoconductrice solide (22) ;
**caractérisé en ce que** l'élément de transfert thermique comprend en outre un moyen de bobine chauffante électrique (70) intégré à l'intérieur de la matrice métallique thermoconductrice solide (22) et opérationnelle pendant une phase de charge de l'accumulateur de chaleur (10‴ʺ) pour agir en tant qu'apport de chaleur ; et
**en ce que** l'échangeur de chaleur (30‴ʺ) intégré à l'intérieur de la matrice métallique thermoconductrice solide (22) est opérationnel pendant une phase de décharge de l'accumulateur de chaleur (10‴ʺ) pour transférer l'énergie thermique du corps solide (20""') à un fluide de transfert de chaleur.

2. Accumulateur de chaleur (10‴ʺ) selon la revendication 1, dans lequel :
le matériau de remplissage thermique solide (21) a un point de fusion qui est plus élevé que le point de fusion de la matrice métallique thermoconductrice solide (22) de sorte que le matériau de remplissage thermique (21) restera solide pendant le fonctionnement de l'accumulateur de chaleur (10‴ʺ) lorsque l'accumulateur de chaleur (10""') est soumis à un cycle thermique entre les niveaux de température haut et bas d'une plage de températures ; et
le corps solide (20‴ʺ) est logé dans un récipient configuré pour fournir un support structurel au corps solide (20‴ʺ) pendant au moins une partie de la plage de températures.

3. Accumulateur de chaleur (10""') selon la revendication 1 ou la revendication 2, dans lequel la matrice métallique thermoconductrice solide (22) comprend une matrice en aluminium solide.

4. Accumulateur de chaleur (10‴ʺ) selon l'une quelconque des revendications précédentes, dans lequel la matrice métallique thermoconductrice solide (22) a une conductivité thermique sensiblement plus élevée que celle du matériau de remplissage thermique solide (21).

5. Accumulateur de chaleur (10‴ʺ) selon l'une quelconque des revendications précédentes, dans lequel le matériau de remplissage thermique solide (21) comprend une pluralité d'éléments discrets dispersés à l'intérieur de la matrice métallique thermoconductrice solide, dans lequel la pluralité d'éléments discrets comprend des particules ou des blocs empilés de forme irrégulière.

6. Système de stockage d'énergie comprenant un accumulateur de chaleur (10‴ʺ) tel que défini dans l'une quelconque des revendications précédentes.

7. Procédé de formation d'un accumulateur de chaleur pour un système de stockage d'énergie, comprenant :
la combinaison d'un matériau de matrice thermoconductrice fondu avec un matériau de remplissage thermique solide dans un moule ; et
l'autorisation au matériau de matrice thermoconductrice de se solidifier pour former un corps solide comprenant une matrice thermoconductrice solide avec le matériau de remplissage thermique solide intégré dans celle-ci ; et
la fourniture d'un élément de transfert thermique en connexion thermique avec la matrice thermoconductrice solide ;
dans lequel l'élément de transfert thermique comprend un moyen de bobine chauffante électrique et un échangeur de chaleur opérationnel pour transférer l'énergie thermique entre le corps solide et un fluide de transfert de chaleur ; et
dans lequel l'élément de transfert thermique est activement refroidi pendant le processus de coulée.

8. Procédé selon la revendication 7, dans lequel le matériau de remplissage thermique solide est fourni sous la forme d'une pluralité d'éléments discrets, dans lequel la pluralité d'éléments discrets comprennent des particules ou des blocs empilés de forme irrégulière.

9. Procédé selon l'une quelconque des revendications 7 à 8,
dans lequel l'étape de fourniture de l'élément de transfert thermique comprend la fourniture de l'élément de transfert thermique dans le moule avant l'ajout du matériau de matrice thermoconductrice fondu au moule.

10. Procédé selon l'une quelconque des revendications 7 à 9,
dans lequel l'élément de transfert thermique est pourvu d'un revêtement protecteur pour protéger l'élément de transfert thermique du matériau de matrice thermoconductrice fondu.

11. Procédé selon l'une quelconque des revendications 7 à 10,
dans lequel le procédé comprend le positionnement de l'élément de transfert thermique à l'intérieur du moule, puis l'ajout ultérieur du matériau de remplissage thermique solide au moule.

12. Procédé selon l'une quelconque des revendications 7 à 11,
dans lequel le procédé comprend en outre la chauffe de l'élément de transfert thermique et du matériau de remplissage thermique solide et l'ajout du matériau de matrice thermoconductrice fondu.

13. Procédé selon l'une quelconque des revendications 7 à 12,
dans lequel le corps solide est coulé en une pluralité d'étapes de sorte que le corps solide soit construit en couches.
